Europäisches Patentamt

European Patent Office

Office européen des brevets

(19)

(11) **EP 0 979 402 B1**

(12) **EUROPÄISCHE PATENTSCHRIFT**

(45) Veröffentlichungstag und Bekanntmachung des Hinweises auf die Patenterteilung:
**02.11.2005 Patentblatt 2005/44**

(21) Anmeldenummer: **98921445.7**

(22) Anmeldetag: **08.04.1998**

(51) Int Cl.[7]: **G01N 21/64**

(86) Internationale Anmeldenummer:
**PCT/EP1998/002054**

(87) Internationale Veröffentlichungsnummer:
**WO 1998/049542 (05.11.1998 Gazette 1998/44)**

(54) **VERFAHREN ZUR OPTISCHEN DETEKTION VON ANALYTMOLEKÜLEN IN EINEM NATÜRLICHEN BIOLOGISCHEN MEDIUM**

METHOD FOR OPTICAL DETECTION OF ANALYTE MOLECULES IN A NATURAL BIOLOGICAL MEDIUM

PROCEDE DE DETECTION OPTIQUE DE MOLECULES A ANALYSER DANS UN MILIEU BIOLOGIQUE NATUREL

(84) Benannte Vertragsstaaten:
**AT CH DE FR GB LI SE**

(30) Priorität: **29.04.1997 DE 19718016**

(43) Veröffentlichungstag der Anmeldung:
**16.02.2000 Patentblatt 2000/07**

(73) Patentinhaber:
• **DREXHAGE, Karl-Heinz**
**D-57076 Siegen (DE)**
• **Wolfrum, Jürgen, Prof. Dr.**
**37124 Rosdorf-Obernjesa (DE)**

(72) Erfinder:
• **DREXHAGE, Karl-Heinz**
**D-57076 Siegen (DE)**
• **Wolfrum, Jürgen, Prof. Dr.**
**37124 Rosdorf-Obernjesa (DE)**

(74) Vertreter: **Köllner, Malte**
**Köllner & Partner**
**Patentanwälte**
**Kennedyallee 109**
**60596 Frankfurt am Main (DE)**

(56) Entgegenhaltungen:
EP-A- 0 563 998   WO-A-88/07670
US-A- 5 348 018

• **MÜLLER R ET AL: "Time-resolved identification of single molecules in solution with a pulsed semiconductor diode laser" CHEMICAL PHYSICS LETTERS, Bd. 262, Nr. 6, 29. November 1996, Seiten 716-722, XP002074126**
• **M.KÖLLNER ET AL: "Fluorescence pattern recognition for ultrasensitive molecule identification: comparison of experimental data and theoretical approximations" CHEMICAL PHYSICS LETTERS, Bd. 250, Nr. 3-4, 1. März 1996, Seiten 355-360, XP002074124**
• **M.SAUER ET AL: "Diode laser based detection of single molecules in solution" CHEMICAL PHYSICS LETERS, Bd. 254, Nr. 3-4, 24. Mai 1996, Seiten 223-228, XP002074125**
• **H. SCHNECKENBURGER: "Time resolved microfluorescence in biomedical diagnosis" OPTICAL ENGINEERING, Bd. 24, Nr. 6, November 1985, Seiten 1042-1044, XP002074127**

## Beschreibung

Die Erfindung bezieht sich auf ein Verfahren zur optischen Detektion von Analytmolekülen in einem natürlichen biologischen Medium.

US-A-5 348 018 offenbart die Untersuchung von einem natürlichen biologischen Medium, insbesondere mit der Diagnose von Kantgewebe, zwecks der Bestimmung des Vorhandenseins eines gut-bzw. bösartigen Tumors mittels einer zeitaufgelösten Fluoreszenztechnik.

Die optische Detektion einzelner Moleküle wurde erstmals in Applied Optics, Band 15 (1976) S. 2965, beschrieben. In den Folgejahren wurde diese Detektionstechnik verbessert bis hin zur Detektion einzelner Fluorophore, d.h. einzelner fluoreszierender chemischer Gruppen (Chemical Physics Letters, Band 174 (1990) S. 553).

Bisher war es jedoch nicht möglich, einzelne Moleküle in natürlichen biologischen Medien zu detektieren. Solche Medien zeigen bei Anregung mit Licht eine starke Hintergrundlumineszenz (Analytical Chemistry Band 68 (1996) S. 2270). Die Lumineszenz resultiert daraus, daß in natürlichen biologischen Medien Puffersubstanzen, Enzyme und andere Makromoleküle enthaltenen sind. Besonders stark ist diese Lumineszenz bei Blutplasma mit seinen ca. 100 verschiedenen Proteinen.

Der Erfindung liegt die Aufgabe zugrunde, ein Verfahren zur Verfügung zu stellen, mit welchem einzelne Analytmoleküle in einem natürlichen biologischen Medium detektiert werden können.

Das verfahren gemäß Anspruch 1 löst diese Aufgabe.

Das Markieren der Analytmoleküle mit Fluoreszenzfarbstoffen macht auch nicht-fluoreszierende Analytmoleküle detektierbar.

Die durch zeitkorreliertes Einzelphotonen-Zählen aufgenommenen Zeitinformationen können für jedes vorgegebene Zeitintervall in Form einer Abklingkurve dargestellt werden. Die Abklingkurve zeigt den Verlauf des Fluoreszenzzzerfalls bzw. des zeitlichen Abklingens der Lumineszenz einer im Beobachtungsvolumen befindlichen Probe. Das natürliche biologische Medium hat in der Regel eine kurze Lumineszenzabklingzeit. Für unverdünntes Blutplasma beträgt die Abklingzeit bei einer Anregung mit Licht einer Wellenlänge von 637 nm (1 nm = 1 Nanometer = $10^{-9}$ m) und einer Detektion der Photonen im Wellenlängenbereich von 650 bis 700 nm etwa 300 ps (1 ps = 1 Pikosekunde = $10^{-12}$ sec). Wählt man zur Markierung Fluoreszenzfarbstoffe aus, die eine wesentlich längere Fluoreszenzlebensdauer haben, z.B. 4 ns (1 ns = 1 Nanosekunde = $10^{-9}$ sec), so läßt sich feststellen, wie stark die Fluoreszenzfarbstoffe zur Abklingkurve beigetragen haben.

Mathematisch läßt sich dies dadurch realisieren, daß bekannte Abklingkurven, sog. Muster, für die Hintergrundlumineszenz des natürlichen biologischen Mediums und der zur Markierung verwendeten Fluoreszenzfarbstoffe, nach Multiplikation mit Wichtungsfaktoren, addiert werden. Daraus wird ein Vergleichsmodell gewonnen. Die Wichtungsfaktoren werden sodann variiert, und die Werte der Wichtungsfaktoren für eine optimierte Übereinstimmung des Vergleichsmodells mit den gewonnenen Zeitinformationen werden bestimmt.

Die nach Optimierung gewonnenen Werte für die Wichtungsfaktoren geben Aufschluß darüber, wie groß der Anteil der von den Fluoreszenzfarbstoffen ausgehenden Photonen an den detektierten Photonen ist. Ist dieser Anteil groß bzw. überschreitet er eine vorgegebene Schwelle, so liegen mit hoher Wahrscheinlichkeit einzelne Analytmoleküle im Beobachtungsvolumen vor.

Das erfindungsgemäße Verfahren ermöglicht daher eine hohe Diskriminierung zwischen der Fluoreszenz der Fluoreszenzfarbstoffe und der Hintergrundlumineszenz des natürlichen biologischen Mediums. Mit Hilfe des erfindungsgemäßen Verfahrens ist es möglich, die von einem markierten Analytmolekül ausgehenden ca. 100 Photonen, die beim Durchgang des Analytmoleküls durch das Beobachtungsvolumen detektiert werden können, gegen einen Hintergrund von ca. 20.000 Photonen pro Sekunde zu diskriminieren. Diese Diskriminierung ist Voraussetzung für die reproduzierbare Detektion einzelner Analytmoleküle im natürlichen biologischen Medium.

In einer Weiterbildung der Erfindung wird ausgenutzt, daß die Hintergrundlumineszenz von natürlichen biologischen Medien, und insbesondere diejenige von Blutplasma, deutlich abnimmt, wenn für das zeitkorrelierte Einzelphotonen-Zählen Anregungslicht mit einer Wellenlänge größer als 600 nm verwendet wird. Besonders geeignet hierfür sind die Wellenlängen zwischen 630 und 670 nm. Da die Fluoreszenz der Farbstoffe stets rotverschoben ist, wird ein zur Detektion verwendeter Wellenlängenbereich stets langwelliger als die Wellenlänge der Anregung sein. Detektiert man vorzugsweise Photonen, deren Wellenlänge zwischen 10 und 60 nm länger als die jeweilige Anregungswellenlänge ist, so erreicht man eine bevorzugte Detektion der Photonen der Fluoreszenzfarbstoffe und eine verbesserte Diskriminierung zwischen Hintergrund und gewünschtem Signal für die Detektion einzelner Analytmoleküle.

Für das zeitkorrelierte Einzelphotonen-Zählen werden in üblicher Weise eine gepulste Lichtquelle, eine optische Meßanordnung und ein Detektor, verbunden mit einer Detektionselektronik, verwendet, um den zeitlichen Abstand zwischen dem Detektionszeitpunkt eines Photons und dem Zeitpunkt des Anregungspulses detektieren zu können. In einer bevorzugten Weiterbildung der Erfindung wird als Quelle für das Anregungslicht ein Diodenlaser verwendet. Diodenlaser sind sehr kostengünstig, sehr klein und erzeugen Licht bei der gewünschten Wellenlängen im Bereich von 630 bis 670 nm.

In einer vorteilhaften Weiterbildung der Erfindung wird ein natürliches biologisches Medium mit einer Mehrzahl von verschiedenen Analytmolekülen untersucht. Die verschiedenen Analytmoleküle werden spezifisch mit verschiedenen Fluoreszenzfarbstoffen mit jeweils unterschiedlichem Fluoreszenzabklingverhalten, z.B. unterschiedlichen Fluoreszenzlebensdauern, markiert.

Die Abklingkurven für vorgegebene Zeitintervalle werden im Falle von monoexponentiellen Fluoreszenzabklingkurven in der Weise modelliert, daß die Fluoreszenzlebensdauer als zusätzlich anzupassende Variable behandelt wird. Beschreibt man die aufgenommenen Zeitinformationen durch ein solches Modell und bestimmt durch Anpassung die Werte für die Wichtungsfaktoren und die Fluoreszenzlebensdauer, so erlauben einerseits die Wichtungsfaktoren festzustellen, ob ein einzelnes oder wenige Analytmoleküle im Beobachtungsvolumen vorliegt. Die Bestimmung der optimal passenden Fluoreszenzlebensdauer erlaubt jedoch zusätzlich, eine Aussage über die Art des verwendeten Fluoreszenzfarbstoffs zu machen. Insbesondere kann dabei festgestellt werden, welche aus einer Anzahl von verschiedenen zur Markierung verwendeten Fluoreszenzfarbstoffen detektiert wurde. Dies erlaubt eine Identifizierung der spezifisch mit den Farbstoffen gekoppelten Analytmoleküle.

Im folgenden wird die Erfindung anhand von Ausführungsbeispielen mit Bezug auf die Zeichnung näher erläutert. In der Zeichnung zeigt:

Fig. 1    eine schematische Darstellung einer Anordnung für zeitkorreliertes Einzelphotonen-Zählen;

Fig. 2    eine Kurve, die die Ergebnisse von Messungen mittels zeitkorreliertem Einzelphotonen-Zählen für unverzögertes Streulicht (gestrichelt) und für unverdünntes Blutplasma (ausgezogen) darstellt;

Fig. 3    Histogramme von Messungen mittels zeitkorreliertem Einzelphotonen-Zählen an einer unverdünnten Blutplasmaprobe, die unterschiedlich markierte Antikörper enthält

Fig. 4A    eine Kurve, die die Anzahl der in 10 ms Zeiteinheiten detektierten Photonen in Abhängigkeit von der Zeit darstellt;

Fig. 4B    eine Kurve, die den relativen Anteil der auf Fluoreszenz der Fluoreszenzfarbstoffe zurückführbaren Photonen pro Zeiteinheit für die der Fig. 4A zugrundeliegenden Zeitinformationen darstellt; und

Fig. 5    eine Häufigkeitsverteilung von bestimmten Fluoreszenzlebensdauern für die Farbstoffe Cy5 und JA169.

Die betrachteten natürlichen biologischen Medien sind insbesondere Gewebeproben und unverdünntes Blutplasma bzw. - serum. Die Medien werden ohne vorherige Aufreinigungsschritte untersucht, weshalb sie als "natürlich" bezeichnet werden. In den folgenden Ausführungsbeispielen wird als natürliches biologisches Medium beispielhaft unverdünntes Blutplasma betrachtet.

Die zu detektierenden Analytmoleküle sind insbesondere Biomoleküle, wie Nukleinsäuren, Proteine, Peptide, Hormone, Porphyrine und Antikörper, aber auch Antigene, Haptene und Tumormarker, sowie toxische Substanzen, Umweltgifte, Pestizide oder pharmazeutische Wirkstoffe wie Alkaloide. In den folgenden Ausführungsbeispielen werden als Analytmoleküle stets Tumormarker betrachtet.

Tumormarker sind in der Regel nur schwach fluoreszenzfähig. Um sie detektieren zu können, werden sie mit Fluoreszenzfarbstoffen markiert.

Unverdünntes Blutplasma zeigt bei Anregung mit Licht eine starke Lumineszenz mit Wellenlängen oberhalb von 700 nm. Um dennoch einzelne Tumormarker in unverdünntem Blutplasma detektieren zu können, müssen verschiedene Maßnahmen ergriffen werden, um diesen Hintergrund zurücktreten zu lassen. Eine der Maßnahmen besteht darin, daß zur Anregung Licht mit einer Wellenlänge größer als 600 nm verwendet wird. Ferner wird nur Licht einer Wellenlänge im Bereich kleiner 700 nm, insbesondere zwischen 650 und 700 nm detektiert. Durch diese erste Maßnahme erreicht man bereits eine starke Reduzierung der Hintergrundlumineszenz des unverdünnten Blutplasmas.

Ferner werden die Tumormarker mit Farbstoffen markiert, die eine hohe Fluoreszenzquantenausbeute in Blutplasma aufweisen. Diese Farbstoffe müssen bei den Anregungswellenlängen oberhalb von 600 nm absorbieren. Besonders vorteilhaft sind Fluoreszenzfarbstoffe mit einem Absorptionsmaximum im Bereich von 620 bis 670 nm, deren Fluoreszenz um 10 bis 60 nm rotverschoben ist und deren Fluoreszenzquantenausbeute mehr als 10 % beträgt. Derartige Fluoreszenzfarbstoffe sind in den Patentschriften DE 42 10 970 und WO93/10189 beschrieben. Einer der beschriebenen und hier verwendeten Farbstoffe trägt die Bezeichnung JA169. Ferner ist der kommerziell erhältliche Farbstoff Cy5 geeignet. Im beschriebenen Ausführungsbeispiel werden diese beiden Farbstoffe zur Markierung der Tumormarker verwendet.

Neben den beschriebenen spektralen Eigenschaften zeigt unverdünntes Blutplasma bei einer Anregung mit Licht von 637 nm und einer Detektion der Photonen im Wellenlängenbereich von 650 bis 700 nm eine Lumineszenzabklingzeit von ca. 300 ps. Um die Hintergrundlumineszenz von unverdünntem Blutplasma deutlich von der Fluoreszenz der markierten Tumormarker bzw. Farbstoff zu unterscheiden, sollten daher die zur Markierung verwendeten Farbstoffe Fluoreszenzlebensdauern aufweisen, die sich deutlich von den genannten 300 ps des unverdünnten Blutplasmas unterscheiden. Die erwähnten Farbstoffe Cy5 und JA169 haben Fluoreszenzlebensdauern von 1,7 ns bzw. 2,7 ns. Diese Fluoreszenzlebensdauern unterscheiden sich hinreichend von den genannten 300 ps. Auch aus diesem Grunde sind die beiden genannten Farbstoffe zur Detektion von einzelnen Tumormarkern in unverdünntem Blutplasma besonders geeignet.

Mit Hilfe des erfindungsgemäßen Verfahrens werden die Lebensdauerunterschiede zu einer weiteren Diskriminierung des Hintergrundsignals gegenüber dem Fluoreszenzsignal der markierten Tumormarker genutzt.

Im betrachteten Ausführungsbeispiel werden die zu detektierenden Tumormarker auf die folgende Weise markiert. Dem Blutplasma werden zu den Tumormarkern passende monoklonale Antikörper zugesetzt. An die monoklonalen Antikörper sind Farbstoffmoleküle gekoppelt, d.h. die monoklonalen Antikörper sind z.B. mit Cy5 oder JA169 markiert. Die monoklonalen Antikörper sind in der Lage, über eine Antikörper-Antigen-Reaktion selektiv an die Tumormarker und nicht an die sonstigen Proteine des Blutplasmas zu binden. Dadurch sind auch die Farbstoffmoleküle mit den Tumormarkern gekoppelt, die Tumormarker also mit Fluoreszenzfarbstoffen markiert.

Zur optischen Detektion der Tumormarker wird in einem Beobachtungsvolumen des Blutplasmas, in dem die markierten Tumormarker gelöst sind, eine Messung mit der Technik des zeitkorrelierten Einzelphotonen-Zählens durchgeführt.

Als Lichtquelle zur Anregung dienen modulierte Lichtquellen. Besonders geeignet sind gepulste Lasersysteme, die Pulse mit einer Pulslänge kleiner als 1 ns bei einer Repetitionsrate von mehr als 10 MHz liefern. Die Anregungslaser können dabei Festkörperlaser, Farbstofflaser, Ionenlaser, Gaslaser, vorzugsweise jedoch Diodenlaser sein.

Der Einsatz gepulster Lichtquellen ermöglicht u.a. eine Trennung zwischen unverzörgertem Streulicht aus dem natürlichen biologischen Medium und dem verzögerten Fluoreszenzlicht der Farbstoffe.

Die vorzugsweise eingesetzten Diodenlaser emittieren in dem gewünschten Wellenlängenbereich oberhalb von 600 nm. Typische Wellenlängen für Diodenlaser liegen zwischen 620 und 670 nm. Der hier eingesetzte Diodenlaser emittiert bei einer Wellenlänge von 637 nm. Seine Pulslänge liegt unterhalb von 500 ps und seine Repetitionsrate beträgt 30 MHz. Seine mittlere Leistung beträgt 0,5 mW.

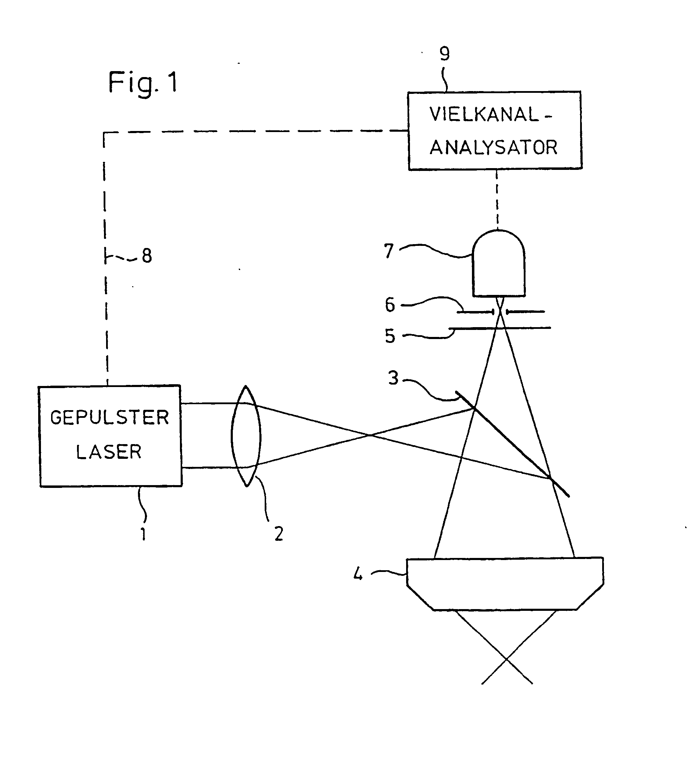

Im folgenden wird auf Fig. 1 Bezug genommen. Der Lichtstrahl des Diodenlasers 1 wird über eine Linse 2 und einen dichroitischen Strahlteiler 3 in ein Mikroskopobjektiv 4 eingekoppelt. Das Mikroskopobjektiv 4 weist eine starke Vergrößerung und eine hohe numerische Apertur auf. Mit Hilfe des Mikroskopobjektivs wird der Laserstrahl in das Beobachtungsvolumen fokussiert.

Durch die Fokussierung des Laserstrahle ist das Beobachtungsvolumen auf wenige Femtoliter begrenzt. Bei einer Konzentration von $10^{-9}$ oder weniger Mol Tumormarker pro Liter Blutplasma befindet sich im Mittel weniger als ein Tumormarker im Beobachtungsvolumen. Die Wahrscheinlichkeit, daß sich mehr als ein Tumormarker im Beobachtungsvolumen befindet, ist entsprechend geringer.

Die Zeit, die ein Tumormarkermolekül benötigt, um durch das Beobachtungsvolumen zu diffundieren, d.h. die Verweil- bzw. Meßzeit, beträgt zwischen Bruchteilen einer 1 ms bis einige ms. Während des Aufenthaltes des fluoreszenzmarkierten Tumormarkers im Beobachtungsvolumen kann der an den Tumormarker gekoppelte Fluoreszenzfarbstoff in Abhängigkeit von seinem Extinktionskoeffizienten bei der Anregungswellenlänge Licht absorbieren. Das absorbierte Licht wird in Abhängigkeit von der Fluoreszenzquantenausbeute und -lebensdauer, der Triplettausbeute und -lebensdauer und der Photostabilität der Fluoreszenzfarbstoffe in Form von Photonen wieder emittiert. Während der Meßzeit durchlaufen die Fluoreszenzfarbstoffe mehrere solcher Anregungs- und Emissionszyklen.

Die emittierten Photonen werden wieder mit Hilfe des Mikroskopobjektivs 4 gesammelt.

Die von den Fluoreszenzfarbstoffen emittierten und vom Mikroskopobjektiv 4 gesammelten Photonen passieren den dichroitischen Strahlteiler 3, der so ausgebildet ist, daß er das rotverschobene Fluoreszenzlicht transmittiert. Hinter dem dichroitischen Strahlteiler befindet sich ein Spektralfilter 5, in der Regel ein Interferenzfilter, der so ausgebildet ist, daß er die Emissionswellenlänge der Fluoreszenzfarbstoffe möglichst verlustfrei transmittiert und alle anderen Wellenlängen möglichst blockt. Aus der spektralen Trennung der Lumineszenz des Blutplasmas und des in der Wellenlänge nicht verschobenen Streulichts von der Fluoreszenz der Farbstoffe mit Hilfe des dichroitischen Strahlteilers und des Interferenzfilters resultiert eine weitere Reduzierung der unerwünschten Hintergrundlumineszenz und somit eine Verbesserung der Diskriminierung zwischen dem Signal der fluoreszenzmarkierten Tumormarker und des Blutplasmas.

Hinter dem Spektralfilter 5 befindet sich eine Lochblende 6 mit einem Durchmesser von 50 bis 200 μm, vorzugsweise mit einem Durchmesser von 100 μm. Auf diese Lochblende wird das Beobachtungsvolumen abgebildet. Es ergibt sich damit eine räumliche Einengung des beobachteten Volumens auf den Fokus des Laserstrahls im Blutplasma. Eine solche Anordnung wird als konfokales Auflicht- bzw. Epifluoreszenz-Mikroskop bezeichnet.

Hinter der Lochblende 6 befindet sich ein Detektor 7. Der Detektor muß so ausgebildet sein, daß er einzelne Photonen mit hoher zeitlicher Auflösung detektieren kann. Dazu sind Photomultiplier und Avalanche-Photodioden geeignet. Besonders geeignet für die Detektion von Photonen bei Wellenlängen zwischen 650 und 700 nm sind Avalanche-Photodioden auf Silizium-Halbleiter-Basis. Die Quanteneffizienz dieser Avalanche-Photodioden beträgt in dem genannten Spektralbereich zwischen 650 und 700 nm bis zu 70%. Ferner weisen Avalanche-Photodioden eine sehr geringe Dunkelzählrate von unter 60 Pulsen pro Sekunde auf. Sie sind daher hoch empfindlich bei einem sehr geringen Hintergrundrauschen.

Mit den für zeitkorreliertes Einzelphotonen-Zählen üblichen Mitteln 8 wird der zeitliche Abstand zwischen dem Zeitpunkt der Anregung der Fluoreszenzfarbstoffe durch einen Impuls des Diodenlasers 1 und dem Zeitpunkt der Detektion eines Photons an der Avalanche-Photodiode 7 bestimmt. Für jedes detektierte Photon wird die so bestimmte Zeitinformation mit Hilfe eines Vielkanal-Analysators 9 in einen Zeitkanal einsortiert. Diese Einsortierung kann sowohl unmittelbar als auch erst bei einer nachfolgenden Auswertung geschehen.

Da die Fluoreszenzfarbstoffe, die an die Tumormarker gekoppelt sind, während des Durchtritts der Tumormarker durch das Beobachtungsvolumen mehrere Anregungs- und Emissionszyklen durchlaufen, kommt es bei einem Durchtritt eines Tumormarkermoleküls durch das Beobachtungsvolumen zu einem Schauer von Photonen, der vom Detektor detektiert wird. Die Anzahl der pro Durchtritt eines Tumormarkermoleküls durch das Beobachtungsvolumen detektierbaren Photonen beträgt einige 100. Diese Photonen können in Zeitintervallen von jeweils z.B. 10 ms gesammelt werden.

Alternativ dazu kann bei jedem Photon außer dem zeitlichen Abstand zwischen Anregungs- und Detektionszeitpunkt ferner der absolute Detektionszeitpunkt bestimmt werden. Ein Aufsummieren der Zeitinformationen erfolgt dann vorzugsweise in Zeitintervallen, die an den Durchtritt eines Tumormarkermoleküls durch das Beobachtungvolumen angepaßt wurden.

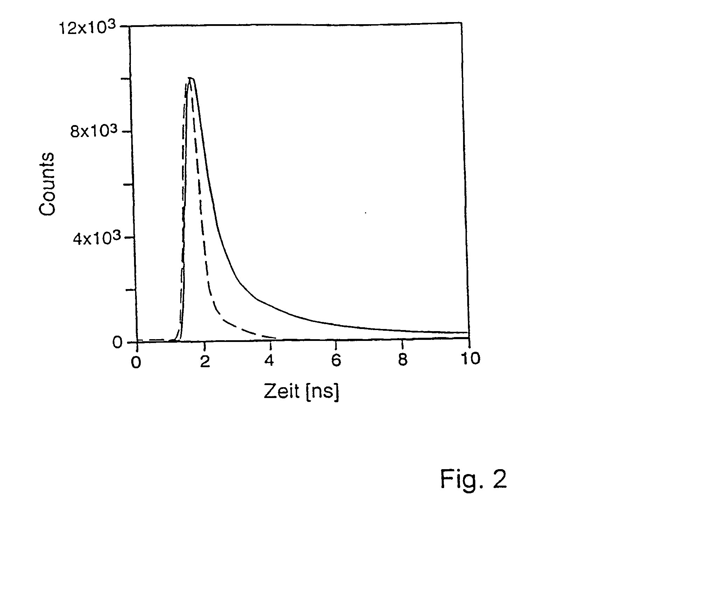

In Fig. 2 ist auf der X-Achse der zeitliche Abstand zwischen der Anregung durch ein Anregungspuls des Lasers 1 und dem Zeitpunkt der Detektion eines Photons durch den Detektor 7 aufgetragen. Auf der Y-Achse ist die Anzahl der in einen Zeitkanal einsortierten Detektionsereignisse, hier als "Counts" bezeichnet, aufgetragen. Die Breite eines typischen Zeitkanals beträgt 50 ps.

In Fig. 2 zeigt die gestrichelte Linie eine durch zeitkorreliertes Einzelphotonen-Zählen mit der beschriebenen Anordnung aufgenommene Abklingkurve für eine Lösung, die das Anregungslicht unverzögert streut. Diese sogenannte Instrumentenfunktion spiegelt die maximale zeitliche Auflösung wieder, die sich aus der Breite der Anregungspulse und dem zeitlichen Auflösungsvermögen des Detektors 7 und der angeschlossenen Einrichtungen 9 ergibt. Jede aufgenommene Abklingkurve, z.B. der Fluoreszenzfarbstoffe, kann nicht in ihrer möglicherweise reinen exponentiellen Gestalt beobachtet werden, sondern wird stets beobachtet als Ergebnis einer Faltung mit der Instrumentenfunktion. Eine Rekonstruktion der reinen exponentiellen Abklingfunktion ist durch eine Entfaltung der gemessenen Abklingkurve möglich.

In Fig. 2 zeigt die ausgezogene Linie eine durch zeitkorreliertes Einzelphotonen-Zählen mit der beschriebenen Anordnung gemessene Abklingkurve für Blutplasma. Die Abklingkurve des Blutplasmas zeigt bei Anregung mit Licht bei 637 nm und einer Detektion der Photonen im Bereich von 650 bis 700 nm eine Abklingdauer von ca. 300 ps.

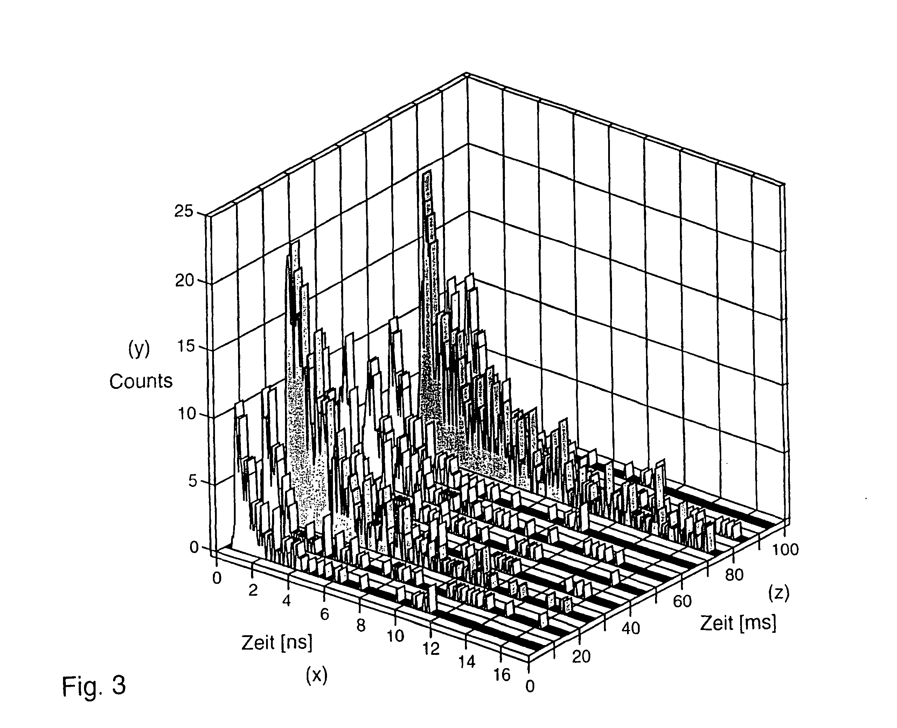

In Fig. 3 sind, wie in Fig. 2, auf der X-Achse wieder der zeitliche Abstand in ns zwischen Anregungspuls und Detektion eines Photons und auf der Y-Achse die Counts aufgetragen, während auf der Z-Achse die während der Messung verstrichene Zeit in ms aufgetragen ist. Die gewonnen Zeitinformationen wurde für jeweils 10 ms aufsummiert und als Abklingkurve dargestellt. Wie erwähnt, enthält das Blutplasma beispielhaft zwei unterschiedlich markierte Antikörper in einer Konzentration von $10^{-11}$ Mol pro Liter. Während die ersten 20 ms in Fig. 3 die reine Hintergrundlumineszenz der Blutplasmaprobe zeigen, wandert nach ca. 30 ms ein Cy5 markierter Antikörper in das Beobachtungsvolumen. Nach 80 ms wandert ein JA169 markierter Antikörper in das Beobachtungsvolumen.

Man sieht, daß sich in Fig. 3 die Abklingkurven des Blutplasmas, des Cy5 markierten Antikörpers und des JA169 markierten Antikörpers insbesondere darin unterscheiden, daß die charakteristische Abklingdauer unterschiedlich lang ist. Die Abklingdauer von JA169 beträgt 2,7 ns und ist von den drei betrachteten Abklingzeiten deutlich als die längste zu erkennen.

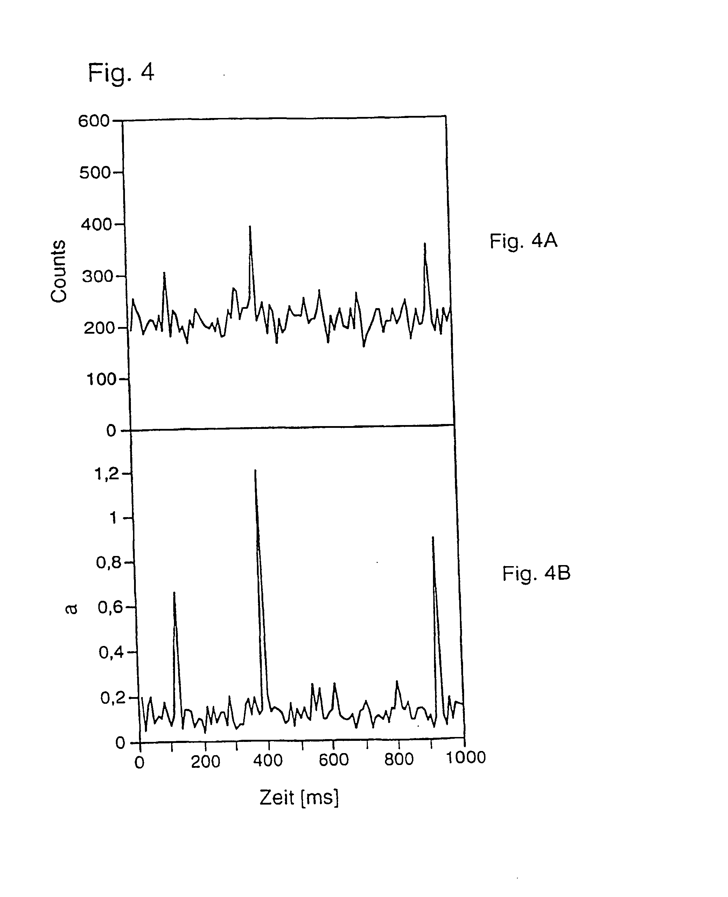

Fig. 4A zeigt die Anzahl der pro Zeiteinheit von 10 ms detektierten Photonen (Counts oder Zählrate) in Abhängigkeit von der während der Messung verstrichenen Zeit in ms. Aus dem reinen Blutplasma werden ca. 200 Photonen pro 10 ms detektiert. Während des Durchtritts eines farbstoffmarkierten Tumormarkermoleküls erhöht sich die Zählrate, wie es in Fig. 4A bei ca. 400 und ca. 900 ms zu erkennen ist.

Im folgenden wird beschrieben, wie eine sichere Detektion einzelner farbstoffmarkierter Tumormarkermoleküle erreicht werden kann.

Um aus den für vorgegebene Zeitintervalle gewonnen Abklingkurven erschließen zu können, ob in dem betrachteten Zeitintervall im Beobachtungsvolumen ein Analytmolekül, hier also ein Tumormarker, vorhanden war, kann dem nachfolgend beschriebenen Verfahren ein Schritt vorangestellt werden, in dem die Abklingkurven mit Hilfe der Instrumentenfunktion entfaltet werden. Alles nachfolgend gesagte kann sich somit entweder auf entfaltete Abklingkurven oder nicht-entfaltete Abklingkurven beziehen.

Zunächst werden mindestens zwei Muster vorgegeben, wobei ein erstes Muster den erwarteten Verlauf der Abklingkurve für die zur Markierung verwendeten Fluoreszenzfarbstoffe wiedergibt und ein zweites Muster den erwarteten zeitlichen Verlauf der Abklingkurve für die Hintergrundlumineszenz des natürlichen biologischen Mediums, hier also des unverdünnten Blutplasmas, wiedergibt. Im folgenden wird das Muster für die Fluoreszenzfarbstoffe als $p_1(i)$ bezeichnet und das Muster für das unverdünnte Blutplasma als $p_2(i)$. Dabei bezeichnet i das i-te mikroskopische Zeitintervall, d.h. die z.B. 50 ps breiten Zeitkanäle der x-Achse der Darstellung der Abklingkurven gemäß Fig. 2.

Die Muster können sowohl direkt aus Eichmessungen gewonnen werden, als auch auf der Basis der durch Eichmessungen gewonnenen Informationen erstellt werden. Im ersten Fall werden die Muster eine konkret vorgegebene Menge von Zahlen sein, die aus den Eichmessungen, ggf. nach Glättung und Normierung auf 1, gewonnen wurden. Im zweiten Fall werden die Muster mit Hilfe einer mathematischen Funktion gewonnen, z.B. einem exponentiellen Abfall, aus der konkrete Werte für die $p_1(i)$ oder $p_2(i)$ berechnet werden können.

Vorteilhafterweise werden die Muster auf eins normiert, d.h.

$$\sum_i p_1(i) = 1 \quad \text{und} \quad \sum_i p_2(i) = 1 \tag{1}$$

wobei über alle mikroskopische Zeitkanäle i summiert wird.

Um ein Modell zu erhalten, das mit den gewonnenen Abklingkurven verglichen werden kann, werden die vorgegebenen Muster $p_1(i)$ und $p_2(i)$ gewichtet addiert, d.h. addiert, nachdem sie mit Wichtungsfaktoren $A_1$ und $A_2$ multipliziert wurden:

$$p(i) = A_1 p_1(i) + A_2 p_2(i) \tag{2}$$

$p(i)$ ist somit das Modell, das mit den gewonnenen Abklingkurven verglichen wird.

In einem Anpassungstest kann das Vergleichsmodell durch Variation der Wichtungsfaktoren $A_1$ und $A_2$ an die gewonnenen Abklingkurven angepaßt werden.

Als Anpassungstest eignen sich insbesondere der Test der kleinsten quadratischen Abweichung und ein informationstheoretischer Test, der auf der minimalen Kullback-Leibler Diskriminierungsinformation als Abstandsmaß basiert. Ersterer ist einfach zu handhaben, und letzterer hat eine besonders geringe statistische Fehlerrate.

Durch einen Anpassungstest können die Werte der Wichtungsfaktoren für eine optimale Übereinstimmung des Vergleichsmodell mit den gewonnenen Abklingkurven bestimmt werden. Das Vorhandensein mindestens eines Tumormarkers wird dann angenommen, wenn der Wichtungsfaktor $A_1$ eine vorgegebene Schwelle überschreitet. Diese Schwelle muß in Abhängigkeit von den konkreten experimentellen Gegebenheiten und der gewünschten Sicherheit der Detektion vorgegeben werden.

Vorzugsweise wird das Muster $p(i)$ durch eine normierte Form der Wichtungsfaktoren ausgedrückt:

$$p(i) = N\,(a p_1(i) + (1 - a)\,p_2(i)) \tag{3}$$

dabei ist

$$a = \frac{A_1}{A_1 + A_2} \text{ und } N = A_1 + A_2 \tag{4}$$

a gibt somit denjenigen relativen Anteil der detektierten Photonen an, der auf Fluoreszenz der Fluoreszenzfarbstoffe zurückgeführt werden kann. N ist die gesamte Anzahl der detektierten Photonen, die zum Erstellen der gewonnenen Abklingfunktionen verwendet wurden. Wird, wie im vorliegenden Ausführungsbeispiel, die Abklingkurve jeweils für ein Zeitintervall von 10 ms erstellt, so stellt N die Anzahl der in dem vorgegebenen Zeitintervall von 10 ms detektierten Photonen dar.

Das so dargestellte Muster $p_1(i)$ ist somit automatisch in seiner Gesamtamplitude auf die Gesamtzahl der im vorgegebenen Zeitintervall detektierten Photonen normiert, wie es aus Gl. (5) unter Verwendung von Gl. (3) und Gl. (1) deutlich wird:

$$\sum_i p(i) = N\left(a\sum_i p_1(i) + (1 - a)\sum_i p_2(i)\right) = N(a \cdot 1 + (1 - a) \cdot 1) = N \tag{5}$$

Dieses Modell wird durch Variation des relativen Anteils *a* an die gewonnene Abklingkurve angepaßt. Dadurch wird der Wert für den relativen Anteil *a* für eine optimale Übereinstimmung des so dargestellten Vergleichsmodells mit der gewonnenen Abklingkurve bestimmt. Überschreitet der relative Anteil *a* eine vorgegebene Schwelle, so wird das Vorhandensein mindestens eines Tumormarkers im Beobachtungsvolumen angenommen. Als geeignet hat sich eine Schwelle von 0,3 erwiesen.

Die Unterscheidung zwischen einem an den Tumormarker gebundenen Farbstoff-markierten Antikörper und einem ungebundenen Farbstoff-markierten Antikörper kann z.B. mit Hilfe der Verweildauer im Beobachtungsvolumen geschehen.

Ebenso kann über eine Korrelationsfunktion in bekannter Weise die Diffusionskonstante des detektierten Moleküls ermittelt werden. Eine Erhöhung der Diffusionskonstante weist dabei auf einen gebundenen Zustand des markierten Antikörpers und damit auf die Detektion eines Tumormarkermoleküls hin.

Ferner kann die Bindung von mit Farbstoffen markierten Antikörpern an Analytmoleküle bzw. Tumormarker auf die folgende Weise festgestellt werden.

Die Antikörper werden mit zwei verschiedenen Farbstoffmolekülen markiert. Die Farbstoffmoleküle unterscheiden sich dabei in ihrer Fluoreszenzlebensdauer. Der erste Farbstoff habe eine Fluoreszenzlebensdauer von $\tau_{11}$ und der zweite von $\tau_{12}$.

In der Regel weisen Antigene, hier also die Tumormarker, mehr als eine Bindungsstelle für Antikörper auf. Teilweise werden ca. 100 Antikörper an einem Antigen gebunden. Durch die Bindung von mehr als einem Farbstoff-markierten Antikörper an einen Tumormarker entsteht ein Komplex aus Tumormarker und mehr als einem Farbstoff-markierten Antikörper. Je mehr Farbstoff-markierte Antikörper am Tumormarker gebunden sind, desto höher ist die Wahrscheinlichkeit, daß die beiden verschiedenen Farbstoffe im Komplex vorhanden sind.

Die Bindung der Farbstoff-markierten Antikörper an einen Tumormarker und damit das Vorliegen eines Tumormarkers kann sodann dadurch festgestellt werden, daß sowohl Farbstoffmoleküle mit der Fluoreszenzlebensdauer $\tau_{11}$ als auch solche mit $\tau_{12}$ gleichzeitig im Beobachtungsvolumen nachgewiesen werden. Ungebundene Farbstoff-markierte Antikörper liegen mit hoher Wahrscheinlichkeit einzeln im Beobachtungsvolumen vor und nicht gleichzeitig mit anderen Farbstoff-markierten Antikörpern.

Mathematisch läßt sich dies dadurch quantifizieren, daß als erstes Muster, d.h. dasjenige für die Fluoreszenzabklingkurve der Farbstoffe, eine Überlagerung der Abklingkurven für beide Fluoreszenzlebensdauern $\tau_{11}$ und $\tau_{12}$ vorgegeben wird. Die relativen Anteile der einzelnen Lebensdauern am ersten Muster könnten dabei z.B. 50% betragen. Um ein quantitatives Kriterium für das Vorliegen eines Komplexes im Beobachtungsvolumen zu haben, wird dann wieder der dem ersten Muster zugehörige relative Anteil a betrachtet. Überschreitet er den Wert von 0,3, so liegt mit hoher Wahrscheinlichkeit ein Tumormarker im Beobachtungsvolumen vor.

Ebenso könnte man zur quantitativen Erfassung das Vergleichsmodell aus drei Mustern aufbauen, einem ersten entsprechend einer Fluoreszenzabklingkurve mit der Fluoreszenzlebensdauer $\tau_{11}$, dem genannten zweiten Muster für das Blutplasma und einem dritten Muster entsprechend einer Fluoreszenzabklingkurve mit der Fluoreszenzlebensdauer $\tau_{12}$. Es wird dann sowohl der relative Anteil für $\tau_{11}$ als auch derjenige für $\tau_{12}$ bestimmt. Ein Kriterium für das Vorliegen eines Tumormarkers im Beobachtungsvolumen ist dann beispielsweise, daß die Summe der relativen Anteile für $\tau_{11}$ und $\tau_{12}$ größer als 0,3 ist und zusätzlich jeder einzelne relative Anteil größer als 0,1 ist.

Die Antikörpermoleküle können bei diesem Verfahren auch mit mehr als zwei verschiedenen Farbstoffmolekülen markiert werden, zu denen entsprechende Muster und Vergleichsmodelle vorgegeben werden.

Außer durch Eichmessungen können die Muster $p_1(i)$ und $p_2(i)$, wie oben erwähnt, auch durch geeignete mathematische Modelle beschrieben werden, die aus Informationen aufgebaut werden, die in Eichmessungen gewonnen wurden. Typischerweise beobachtet man, daß die Fluoreszenz von Fluoreszenzfarbstoffen sich durch einen monoexponentiellen Verlauf beschreiben läßt. Das Muster $p_1(i)$ kann in entfalteter Form somit durch Gl. (6) beschrieben werden:

$$p_1(i) = \Delta t(i)\frac{1}{\tau_1}\,e^{-t(i)/\tau_1} \tag{6}$$

solange $\Delta t(i)$ als klein gegenüber der Fluoreszenzlebensdauer $\tau_1$ angenommen werden kann. Dabei ist $\Delta t(i)$ die zeitliche Dauer eines mikroskopischen Zeitintervalls, im betrachteten Ausführungsbeispiel 50 ps, und $\tau_1$ die Fluoreszenzlebensdauer der zur Markierung der Tumormarkermoleküle verwendeten Fluoreszenzfarbstoffe. Für Cy5 beträgt $\tau_1$ 1,7 ns und für JA169 2,7 ns. $t(i)$ ist der mikroskopische Zeitpunkt, an dem das i-te mikroskopische Zeitintervall beginnt.

In der Regel haben alle mikroskopischen Zeitintervalle $\Delta t(i)$ die qleiche zeitliche Dauer $\Delta t$ so daß gilt:

$$\Delta t(i) = \Delta t \text{ und } t(i) = i\,\Delta t \tag{7}$$

Werden die mikroskopischen Zeitintervalle bzw. -kanäle i nicht von Kanal 0 sondern von Kanal 1 an gezählt, so muß ggf. i durch (i-1) ersetzt werden.

Unter diesen Bedingungen erhält man als Muster für einen monoexponentiellen Zerfall die folgende Darstellung:

$$p_1(i) = \Delta t \, \frac{1}{\tau_1} \, e^{-i\Delta t/\tau_1} \tag{8}$$

Das Muster $p_1(i)$, wie es in Gl. (6) bzw. (8) dargestellt ist, kann dazu verwendet werden, mit einem aus einer Eichmessung gewonnenen und entfalteten Muster $p_2(i)$ gewichtet addiert zu werden. Das durch diese gewichtete Addition gewonnene Modell kann dann mit den gewonnenen und entfalteten Abklingkurven verglichen werden, um den relativen Anteil a zu gewinnen.

Ebenso kann das durch G1.(6) bzw. (8) gewonnene Muster $p_1(i)$ mit der Instrumentenfunktion gefaltet werden. Danach kann es mit einem nicht-entfalteten und aus einer Eichmessung gewonnenen Muster $p_2(i)$ gewichtet addiert werden. Das sich ergebende p(i) kann mit einer nicht-entfalteten gewonnenen Abklingkurve verglichen werden.

Ebenso kann die Abklingkurve für das unverdünnte Blutplasma durch einen monoexponentiellen Zerfall gemäß Gl. (9) beschrieben werden:

$$p_2(i) = \Delta t \, \frac{1}{\tau_2} \, e^{-i\Delta t/\tau_2} \tag{9}$$

wobei $\tau_2$ die effektive Lumineszenzabklingzeit des unverdünnten Blutplasmas ist, die bei Anregung mit Licht bei 637 nm und einer Detektion der Photonen im Bereich von 650 bis 700 nm ca. 300 ps beträgt.

Werden beide Muster $p_1(i)$ und $p_2(i)$ durch monoexponentielle Verläufe der Abklingkurven beschrieben, so spricht man von einem biexponentiellen Modell.

Fig. 4B zeigt den für verschiedene Zeitintervalle von jeweils 10 ms während einer Messung bestimmten relativen Anteil a. Vergleicht man die Figuren 4A und 4B, so sieht man, daß eine Betrachtung des relativen Anteils a eine deutliche Verbesserung des Signal/Rausch-Verhältnisses gegenüber Fig. 4A bewirkt. Ferner erkennt man in Fig. 4B zusätzlich, daß bei ca. 100 ms ein weiterer Tumormarker durch das Beobachtungsvolumen trat. Dies konnte in Fig. 4A nicht verläßlich erkannt werden. In Fig. 4A wurde lediglich die Anzahl der pro 10 ms detektierten Photonen betrachtet. Das Betrachten des relativen Anteils a wird dadurch möglich, daß die einzelnen Photonen zeitkorreliert detektiert werden und somit die in den unterschiedlichen Abklingzeiten enthaltene Information genutzt werden kann.

Im folgenden wird ein zweites Ausführungsbeispiel beschrieben, daß neben der Detektion einzelner Tumormarkermoleküle auch eine Identifizierung verschiedener Tumormarker bzw. Analytmoleküle erlaubt. Es wird also ein unverdünntes Blutplasma untersucht, in dem verschiedene Tumormarker gelöst sind.

In diesem zweiten Ausführungsbeispiel werden die zu detektierenden verschiedenen Tumormarker auf die folgende Weise markiert. Dem Blutplasma werden verschiedene, zu den verschiedenen Tumormarkern passende monoklonale Antikörper zugesetzt. An die monoklonalen Antikörper sind jeweils verschiedene Farbstoffmoleküle gekoppelt. Ein monoklonaler Antikörper ist z.B. mit Cy5 und ein anderer mit JA169 markiert. Eine solche Markierung kann während einer Vorbereitung der monoklonalen Antikörper erfolgen.

Die zur spezifischen Markierung ausgewählten Fluoreszenzfarbstoffe müssen dabei jeweils ein unterschiedliches Fluoreszenzabklingverhalten zeigen, da dieses zur Identifizierung genutzt wird.

Die verschiedenen monoklonalen Antikörper sind, wie beschrieben, in der Lage, über eine Antikörper-Antigen-Reaktion spezifisch an die verschiedenen Tumormarker zu binden. Dadurch sind auch die verschiedenen Farbstoffmoleküle spezifisch mit den Tumormarkern gekoppelt.

In Fig. 3 ist erkennbar, daß das Antikörpermolekül, das sich bei 30 ms im Beobachtungsvolumen befindet, mit Cy5 markiert ist, während das Antikörpermolekül, das sich bei 80 ms im Beobachtungsvolumen befindet, mit JA169 markiert ist, da die Abklingkurve bei 30 ms schneller als die bei 80 ms abfällt, also eine kürzere Fluoreszenzlebensdauer aufweist. Die Tumormarker sind somit im Prinzip aufgrund der Fluoreszenzlebensdauer der spezifisch mit ihnen verbundenen Fluoreszenzfarbstoffe identifizierbar.

Zum Identifizieren der verschiedenen Tumormarker über das unterschiedliche Fluoreszenzabklingverhalten der Farbstoffe, wird für jeden zur Markierung verwendeten Farbstoff ein erstes Muster vorgegeben. Sodann wird für jeden Farbstoff dieses Muster mit dem vorgegebenen zweiten Muster für das Blutplasma gewichtet addiert, um jeweils zugehörige Vergleichsmodelle zu erhalten. Durch Variation der Wichtungsfaktoren wird die Übereinstimmung zwischen dem jeweiligen Vergleichsmodell und den gewonnenen Zeitinformationen optimiert.

Dasjenige Vergleichsmodell, das die beste Übereinstimmung mit den gewonnenen Zeitinformationen aufweist, wird als das zutreffende Vergleichsmodell angesehen. Das zum Erstellen dieses Vergleichsmodells verwendete erste Muster eines Farbstoff gibt Aufschluß über das Vorliegen dieses Farbstoffs im Beobachtungsvolumen. Dieses, wiederum, gibt - aufgrund der spezifischen Markierung der Tumormarker - Aufschluß darüber, welcher Tumormarker detektiert wurde.

In einer Weiterbildung des zweiten Ausführungsbeispiels werden die verschiedenen Fluoreszenzfarbstoffe so gewählt, daß sie einen monoexponentiellen zeitlichen Verlauf der Fluoreszenz erwarten lassen. Das erste Muster $p_1(i)$ wird durch Gl. (6) bzw. (8) beschrieben. Die Fluoreszenzlebensdauer $\tau_1$ wird als zusätzliche Variable zur Anpassung des Vergleichsmusters an die gewonnene Abklingkurve verwendet.

Man erhält somit einerseits den relativen Anteil a und andererseits die optimal passende Fluoreszenzlebensdauer $\tau_1$ als Ergebnis einer Anpassung zwischen Vergleichsmodell und gewonnener Abklingkurve. Der relative Anteil a ermöglicht die Detektion der Tumormarkermoleküle, während die gewonnene Fluoreszenzlebensdauer $\tau_1$ deren Identifizierung erlaubt.

Auch in diesem Ausführungsbeispiel können als Muster $p_2(i)$ für das Blutplasma sowohl durch Eichmessung gewonnene Muster als auch aus einem monoexponentiellen Modell gewonnene Muster verwendet werden. Im letzteren Fall wird eine Lumineszenzabklingzeit von 300 ps des Blutplasmas angenommen.

Ferner können auch in diesem Ausführungsbeispiel die Muster bzw. Abklingkurven entfaltet oder nicht-entfaltet ausgewertet werden.

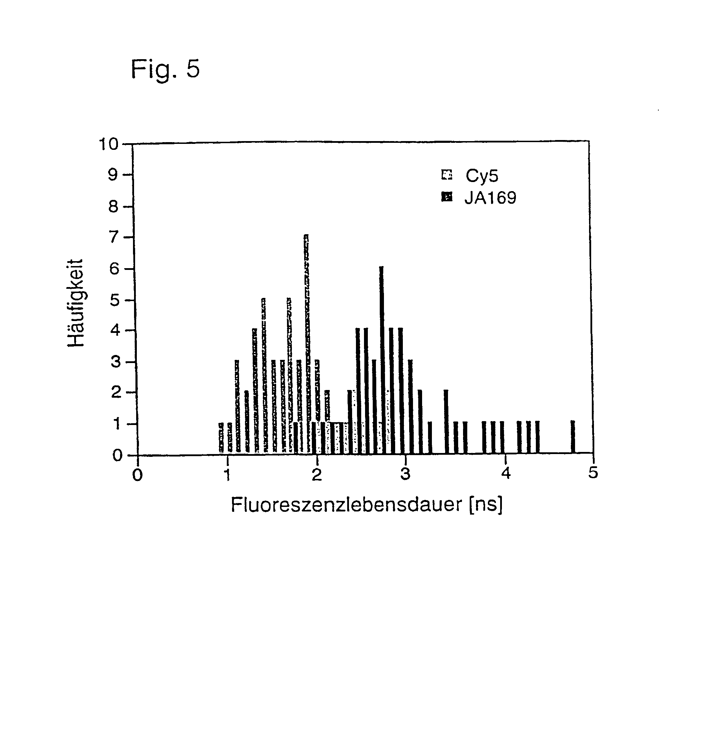

Fig. 5 zeigt die Häufigkeit von Fluoreszenzlebensdauern in ns, wie sie mit Hilfe des soeben beschriebenen Verfahrens für die zur Markierung verwendeten Farbstoffe Cy5 und JA169 bestimmt wurden. Man sieht, das die für Cy5 und JA169 bestimmten Fluoreszenzlebensdauern um ihren Mittelwert von 1,7 bzw. 2,7 ns zentriert sind und mit hinreichender Verläßlichkeit erkannt werden können.

Wird in einem dritten Ausführungsbeispiel das Vergleichsmuster durch die einfache Gl. (10) beschrieben:

$$p(i) = B_1 e^{-t(i)/\tau_1} + B_2 e^{-t(i)/\tau_2} \qquad (10)$$

so zeigt ein Vergleich mit den Gleichungen (3), (6) und (8), daß gilt:

$$B_1 = Na \frac{\Delta t}{\tau_1} \text{ und } B_2 = N(1 - a) \frac{\Delta t}{\tau_2} \qquad (11)$$

Als Kriterium für das Vorhandensein eines Tumormarkers im Beobachtungsvolumen wird in diesem Ausführungsbeispiel das Überschreiten einer Schwelle durch das normierte Produkt des Wichtungsfaktors $B_1$ mit der bestimmten Fluoreszenzlebensdauer $\tau_1$ herangezogen. Dieses normierte Produkt ist definiert als:

$$\frac{B_1\tau_1}{B_1\tau_1 + B_2\tau_2} \qquad (12)$$

Man erkennt aus Gl. (13) mit Hilfe von Gl. (11), daß dieses normierte Produkt gleich dem relativen Anteil a ist:

$$\frac{B_1\tau_1}{B_1\tau_1 + B_2\tau_2} = \frac{Na\Delta t}{Na\Delta t + N(1 - a)\Delta t} = a \qquad (13)$$

Im Rahmen der Erfindung sind zahlreiche Abwandlungen möglich. Es ist beispielsweise nicht unumgänglich, die gewonnenen Zeitinformationen für vorgegebene Zeitintervalle zu Abklingkurven zusammenzufassen oder als solche darzustellen. Vielmehr kann mit Hilfe entsprechenden mathematischen Modellen mit den für jedes detektierte Photon gewonnene Zeitinformationen direkt gerechnet werden. Die Muster werden in einem solchen Fall passend ausgebildet und bilden nicht notwendigerweise Abklingkurven.

Auch können für die Muster $p_1(i)$ und $p_2(i)$ nicht nur monoexponentielle Modelle sondern auch ein mehrexponentielle oder sonstige Modelle verwendet werden. Vorzugsweise werden diese Modelle keine weiteren Variablen enthalten. Es ist jedoch auch denkbar, daß diese Modelle weitere Variablen, etwa die Gewichte einzelner Exponentialkomponenten, enthalten.

Ferner können außer den erwähnten Farbstoffen Cy5 und JA169 auch andere Farbstoffe zur Markierung verwendet werden.

Schließlich können außer der beschriebenen biochemischen spezifischen Antikörper-Antigen-Reaktion auch andere, z.B. kovalente Wege der Markierung beschritten werden, oder es wird eine Hybridisierung zwischen DNS-Strängen ausgenutzt.

**Patentansprüche**

1.  Verfahren zur optischen Detektion eines einzelnen Analytmoleküls in einem natürlichen biologischen Medium,

    a) wobei das Analytmolekül mit mindestens einem Fluoreszenzfarbstoff markiert wird;

    b) wobei aus einem Beobachtungsvolumen im natürlichen biologischen Medium Einzelphotonen aufgenommen werden, um ein zeitkorreliertes Einzelphotonen-Zählen durchzuführen und Zeitinformationen für die Einzelphotonen zu gewinnen;

    c) wobei mindestens zwei Muster vorgegeben werden, wobei ein erstes Muster von dem mindestens einen Fluoreszenzfarbstoff erwartete Zeitinformationen und ein zweites Muster von dem natürlichen biologischen Medium erwartete Zeitinformationen beschreibt;

    d) wobei ein Vergleichsmodell durch eine gewichtete Addition der Muster gebildet wird;

    e) wobei das Vergleichsmodell durch Variation der Wichtungsfaktoren an die gewonnenen Zeitinformationen angepasst wird;

    f) wobei die Werte der Wichtungsfaktoren für eine optimierte Übereinstimmung des Vergleichsmodells mit den gewonnenen Zeitinformationen bestimmt werden; und

    g) wobei das Vorhandensein mindestens des einzelnen Analytmoleküls dann angenommen wird, wenn der bestimmte Wert des Wichtungsfaktors für das erste Muster eine vorgegebene Schwelle überschreitet.

2.  Verfahren nach Anspruch 1, **dadurch gekennzeichnet,**
    **daß** zum Markieren des Analytmoleküls Fluoreszenzfarbstoffe mit einer Rotverschiebung zwischen 10 und 60 nm verwendet werden;
    **daß** Anregungslicht mit einer Wellenlänge zwischen 630 und 670 nm verwendet wird; und
    **daß** die Detektion auf Photonen mit einer zwischen 10 und 60 nm längeren Wellenlänge als das jeweilige Anregungslicht konzentriert wird.

3.  Verfahren nach Anspruch 2, **dadurch gekennzeichnet, daß** als Lichtquelle (1) für das Anregungslicht ein Diodenlaser verwendet wird.

4.  Verfahren nach einem der Ansprüche 1 bis 3, **dadurch gekennzeichnet, daß** bei Untersuchung eines natürlichen biologischen Mediums mit einer Mehrzahl von verschiedenen Analytmolekülen

    a) verschiedene Fluoreszenzfarbstoffe mit jeweils unterschiedlichen Fluoreszenzlebensdauern zum spezifischen Markieren der verschiedenen Analytmoleküle verwendet werden.

5.  Verfahren nach Anspruch 4, ferner **dadurch gekennzeichnet, daß**

    b) jeder der verschiedenen Fluoreszenzfarbstoffe so gewählt wird, daß er einen monoexponentiellen zeitlichen Verlauf der Fluoreszenz erwarten läßt;

    c) aus diesem Fluoreszenzverlauf das erste Muster gewonnen wird;

    d) der Wert der Fluoreszenzlebensdauer für das erste Muster für eine optimierte Übereinstimmung des Vergleichsmodells mit den gewonnenen Zeitinformationen bestimmt wird, indem das erste Muster in Abhängigkeit von der Fluoreszenzlebensdauer variiert wird; und daß

    e) jedes Analytmolekül mittels der in Schritt d) optimiert gewählten Fluoreszenzlebensdauer für das erste Muster identifiziert wird.

**Claims**

1.  Method for optical detection of a single analyte molecule in a natural biological medium,

a) wherein the analyte molecule is marked with at least one fluorescent dye;

b) wherein from an observed volume in the natural biological medium single photos are recorded in order to carry out a time-correlated single photon counting and to obtain temporal information for the single photons;

c) wherein at least two patterns are predetermined, wherein a first pattern describes temporal information expected from the at least one fluorescent dye and a second pattern describes temporal information expected from the natural biological medium;

d) wherein a comparative model is formed by a weighted addition of the patterns;

e) wherein the comparative model is adapted to the obtained temporal information by variation of the weighting factors;

f) wherein the values of the weighting factors for optimum fit of the comparative model with the obtained temporal information are determined; and

g) wherein the presence of at least the one analyte molecule is assumed if the determined value of the weighting factor for the first pattern exceeds a predetermined threshold.

2. Method as claimed in Claim 1, **characterized in**

- **that** for marking of the analyte molecule fluorescent dyes are used with a red shift between 10 and 60 nm;
- **that** excitation light with a wavelength between 630 and 670 nm is used; and
- **that** the detection is concentrated on photons with a wavelength between 10 and 60 nm longer than the respective excitation light.

3. Method as claimed in Claim 2, **characterized in that** a diode laser is used as light source (1) for the excitation light.

4. Method as claimed in any one of claims 1 to 3, **characterized in that** in the case of examination of a natural biological medium with a plurality of different analyte molecules

a) different fluorescent dyes each with different fluorescence lifetimes are used for specific marking of the different analyte molecules.

5. Method as claimed in Claim 4, further **characterized in that**

b) each of the different fluorescent dyes is chosen such that it allows a monoexponential decay of the fluorescence over time to be expected;

c) the first pattern is obtained from this fluorescence decay;

d) the value of the fluorescence lifetime for the first pattern is determined for an optimum fit of the comparative model with the obtained temporal information by variation of the first pattern as a function of the fluorescence lifetime; and that

e) each analyte molecule is identified by means of the florescence lifetime for the first pattern optimized in step d).

## Revendications

1. Procédé de détection optique d'une molécule individuelle d'analyte dans un fluide biologique naturel, dans lequel :

a) la molécule d'analyte est marquée avec au moins un colorant à fluorescence,

b) à partir d'un volume d'examen situé dans le fluide biologique naturel, on enregistre des photons individuels pour réaliser un comptage corrélé dans le temps des photons individuels et obtenir des informations temporelles sur les photons individuels,

c) au moins deux motifs sont prédéterminés, un premier motif décrivant des informations temporelles attendues sur le colorant à fluorescence au moins présent et un deuxième motif décrivant les informations temporelles attendues sur le fluide biologique naturel,

d) on forme un modèle comparatif par addition pondérée des motifs,

e) le modèle comparatif est adapté par modification des facteurs de pondération aux informations temporelles obtenues,

f) les valeurs des facteurs de pondération sont déterminées de manière à obtenir une correspondance optimale entre le modèle comparatif et les informations temporelles obtenues et

g) on pose l'hypothèse qu'au moins la molécule d'analyte individuelle est présente lorsque la valeur définie du facteur de pondération pour le premier motif est supérieure à un seuil prédéterminé.

2. Procédé selon la revendication 1, **caractérisé en ce que** pour marquer la molécule d'analyte, on utilise des colorants à fluorescence qui présentent un décalage vers le rouge compris entre 10 et 60 nm,
   **en ce que** l'on utilise une lumière d'excitation dont la longueur d'onde est comprise entre 630 et 670 nm et
   **en ce que** la détection est concentrée sur des photons dont la longueur d'ondes est de 10 à 60 nm plus longue que la lumière d'excitation utilisée.

3. Procédé selon la revendication 2, **caractérisé en ce que** comme source (1) de lumière d'excitation, on utilise un laser à diode.

4. Procédé selon l'une des revendications 1 à 3, **caractérisé en ce que** lors de l'étude d'un fluide biologique naturel qui compte plusieurs molécules d'analyte différentes,

   a) on utilise différents colorants à fluorescence qui ont chacun des durées de fluorescence différentes pour marquer de manière spécifique les différentes molécules d'analyte.

5. Procédé selon la revendication 4, **caractérisé en outre en ce que**:

   b) chacun des différents colorants à fluorescence est sélectionné de manière à permettre d'attendre une évolution temporelle mono-exponentielle de la fluorescence,
   c) le premier motif est obtenu à partir de cette évolution de la fluorescence,
   d) la valeur de la durée de la fluorescence du premier motif est déterminée de manière à obtenir une correspondance optimale entre le modèle comparatif et les informations temporelles obtenues, en faisant varier le premier motif en fonction de la durée de la fluorescence et
   e) **en ce que** chaque molécule d'analyte est identifiée au moyen de la durée de fluorescence optimale sélectionnée pour le premier motif à l'étape d).

Fig. 1

Fig. 2

Fig. 3

Fig. 4

Fig. 4A

Fig. 4B

Fig. 5